# EUROPEAN PATENT SPECIFICATION

(11) **EP 4 310 009 B1**
(45) Date of publication and mention of the grant of the patent: **18.12.2024**
(21) Application number: 21718631.1
(22) Date of filing: 18.03.2021
(51) Int. Cl.: B64G 1/64

(54) **DOCKING SYSTEM FOR SPACECRAFT AND SPACCRAFT COMPRISING THE SAME**
ANDOCKSYSTEM FÜR RAUMFAHRZEUG UND RAUMFAHRZEUG DAMIT
SYSTÈME D'ACCOUPLEMENT POUR VÉHICULES SPATIAUX ET VÉHICULE SPATIAL LE COMPRENANT

(43) Date of publication of application: 24.01.2024
(73) Proprietor: Airbus Defence and Space, S.A., 28906 Getafe (Madrid) (ES)
(72) Inventor: ANDRÉS MATEY, Juan Miguel, 28022 Madrid (ES); BEÑARAN ECHEZARRETA, Ioritz, 28022 Madrid (ES)
(74) Representative: Elzaburu S.L.P.
(86) International application number: PCT/ES2021/070199
(87) International publication number: WO 2022/195137

(56) References cited:
- CN-A- 103 926 936
- CN-A- 104 477 417
- US-A- 5 040 749
- US-B1- 6 354 540

## Description

### Field of the invention

The present invention relates to a docking system for spacecraft and to a spacecraft that comprises such a docking system. The docking system is especially applicable to a satellite adapter in a launcher.

### Background of the invention

Nowadays, a spacecraft is usually designed with a limited lifespan of around 10-15 years, depending on the mission. The main factor that limits the lifetime of a spacecraft is usually the lack of fuel to perform the orbital and attitude maneuvers. The mass and the volume of these vehicles are limited by the launcher characteristics, so an increase of the propellant mass to extend the lifespan is not a solution.

This is a problem that face most of the vehicles, at least the ones that do not use electric propulsion. However, this fact is much more limiting when talking about telecommunication satellites, more specifically the ones placed in the geostationary orbit.

The telecommunication satellites that perform in the geostationary orbit have been assigned a specific slot inside this orbit, in order to develop their missions without interfering with other vehicles. This occurs because the geostationary orbit is very strategical for telecommunication satellites, since they can always point to the same sub-satellite point to develop their activities.

Moreover, they have a considerable mass (about some thousands of kilograms) and volume, so the launch cost of these satellites is too high.

As a consequence, in order to increase the economic profitability of these satellites, it is necessary to think in a way to extend the lifespan of these vehicles.

In order to support all these, it has been discussed the use of an external vehicle that would dock to the target satellite (usually, a telecommunication satellite), providing an increase in the lifespan. The type of support given to the satellite could be very wide, being the principal one the required propulsion to perform the orbital and attitude maneuvers, but it could also be the telecommunication or navigation support. The vehicle proposed could be categorized as a Commercial Servicing Vehicle (CSV), although there are many kind of vehicles that could fit on this group.

The first type of CSV that has been considered is the Mission Extension Vehicle (MEV). This vehicle is an independent vehicle designed and fabricated from the beginning, in order to perform the rendezvous and the docking with several target satellites and extend the lifespan of these satellites.

Until 2019, all the satellites that were designed had a finite lifespan, mainly determined by the amount of fuel that could be integrated inside the vehicles. However, in October 2019, the first Mission Extension Vehicle was launched, in order to perform the docking with the satellites that were in their last phase of their lifespan, giving operational support as propulsion maneuvers or attitude and orbit control, in order to extend their operational lifespan.

This was a very relevant milestone in space missions, as it changed the way the satellites will be designed in the following decades. On one hand, it will be possible to perform longer missions using the same satellites, increasing the return on invested capital (mainly for geostationary satellites). On the other hand, the limitation of the fuel in the satellite design is reduced, as now it is able to perform smaller satellites that will be assisted periodically to perform their missions.

However, the design, fabrication and launch of a MEV also represents a significant cost, apart from the fact that these vehicles should be capable to reach to the geostationary orbit, with the amount of propellant mass that it involves.

Currently there are systems in which a service satellite has an on-orbit docking and locking device to perform the docking and locking of the service satellite and a target satellite.

CN104477417A discloses a satellite-to-satellite on-orbit docking and locking device that is used for docking a service satellite with a non-cooperative target satellite, and comprises a guide structure, a locking device, and a positioning pin, wherein the guide structure is mounted on the service satellite, the guide structure comprises a tapered surface for eliminating the deviation in the axial tilt angle of docking posture with the non-cooperative target satellite, the guide structure further comprises a sectioned notch with a bevel edge, and the sectioned notch is used for correcting the deviation in circumferential rotation angle with respect to a docking ring of the non-cooperative target satellite; the locking device is mounted on the service satellite, the locking device comprises a cam wheel, two clamping claws stretch out from the edge of the cam wheel, and a bayonet is formed between the two clamping claws, so as to restrain the inner edge of the docking ring of the non-cooperative target satellite. The positioning pin is arranged on the guide structure and is matched with a positioning pin hole on the docking ring of the non-cooperative target satellite, so as to precisely guide and restrain the relative position between the service satellite and the non-cooperative target satellite. The satellite-to-satellite on-orbit docking and locking device is applicable to all satellites with the docking ring; and the satellite-to-satellite on-orbit docking and locking device is substantially wide in application range, including large satellites, small satellites, and micro satellites.

US6354540B1 discloses a fully androgynous, reconfigurable closed loop feedback controlled low impact docking system with load sensing electromagnetic capture ring. The docking system of the present invention preferably comprises two docking assemblies, each docking assembly comprising a load sensing ring having an outer face, one of more electromagnets, one or more load cells coupled to said load sensing ring. The docking assembly further comprises a plurality of actuator arms coupled to said load sensing ring and capable of dynamically adjusting the orientation of said load sensing ring and a reconfigurable closed loop control system capable of analyzing signals originating from said plurality of load cells and of outputting real time control for each of the actuators. The docking assembly incorporates an active load sensing system to automatically dynamically adjust the load sensing ring during capture instead of requiring significant force to push and realign the ring.

These devices satisfactorily perform the docking function and are suitable for satellites with an interface ring. However, the service spacecraft on which the docking system is assembled are spacecraft specifically designed and launched to perform the docking with satellites that were in their last phase of their lifespan.

### Summary of the invention

Thus, it is an object of the invention to provide a docking system for spacecraft suitable for using in a spacecraft that has already been used in a previous mission and can be reused for another one in orbit as a continuation task.

The invention provides a docking system for spacecraft, comprising an end ring and a docking assembly, the docking assembly comprising:
a support ring connected to a plurality of linear actuators for deployment and retracting, the support ring and the end ring being connected, such that in a stowed position the docking assembly is placed inside the end ring and in a deployed position the docking assembly is placed out of the end ring,
wherein the docking assembly comprises at least three docking platforms hinged to the support ring,
each docking platform comprising:
   - a main body,
   - a guide member,
   - initial engagement means, and
   - a docking mechanism fixed to the main body and articulated to the end ring,
the support ring and the end ring being connected by elastic means.

The invention also provides a spacecraft with a docking system that comprises a docking system for spacecraft of the invention on one end, such that one end of the linear actuators is attached to the inner surface of the spacecraft.

This configuration of the docking system for spacecraft allows its integration in the volume of the spacecraft when the docking assembly is in its stowed position.

The use of a satellite adapter as a spacecraft with a docking system has a plurality of advantages. On the one hand, as the design and fabrication cost of the satellite structure will be reduced, the economical saving will be considerable. Moreover, the cost of the launch would disappear, since the satellite adapter would already be in-orbit once the first mission is completed (payload separation). On the other hand, the time needed to develop this mission for the extension of the satellite will be considerably lower, since many steps of the development of the satellite would be skipped.

Other advantages of the invention are listed below:
- Compatible with the satellite adapters of launchers.
- Suitable to grab to the standard satellite interface ring of a standardized diameter (i.e. 937 mm or 1194 mm).
- It does not interfere in the functioning of the satellite separation mission, as the docking mechanism cannot exceed the dimensions of the internal volume of the satellite adapter.
- The docking mechanism cannot have contact with any element of the target satellite other than the satellite interface ring during the docking.
- It is a reversible mechanism, in order to perform several dock and undocks with various target satellites (giving support to various satellites along the mission).
- Operation as simple as possible, being the functioning as mechanical as possible.

Other features and advantages of the present invention will become apparent from the following detailed description of an illustrative embodiment and not limiting its purpose in connection with the accompanying figures.

### Description of figures

Fig. 1 is a perspective view of a docking system for spacecraft according to an embodiment of the invention, in the stowed position.
Figs. 2-4 are views of the docking system for spacecraft of figure 1 during deployment.
Figs. 5-6 are views of the docking system for spacecraft with the support ring displaced.
Fig. 7 is a view of the docking system for spacecraft after engaging the ring of the target satellite.
Figs. 8-9 are views of the docking system in the last stage of the docking.
Fig. 10 show the satellite adapter, the last stage of the launcher, the customer satellite and the docking system for spacecraft before the satellite separation.
Fig. 11 shows the separation of the customer satellite from the satellite adapter.
Fig. 12 shows the deployment of the docking assembly after the separation of the customer satellite.
Fig. 13 shows the approximation of the target satellite with the satellite adapter.
Fig. 14 shows the docking between the target satellite and the satellite adapter.
Fig. 15 shows the movement sequence of the latch mechanism during the docking final phase.
Fig. 16 shows the elements of the docking mechanism.

### Detailed description of the invention

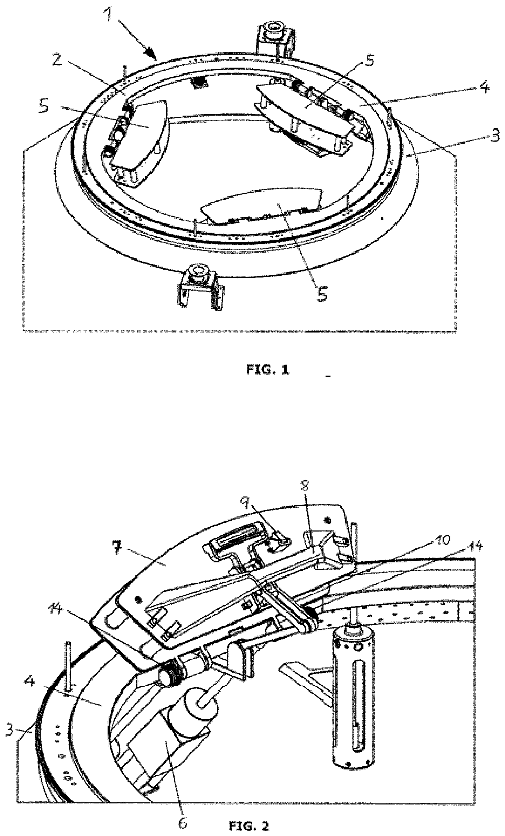

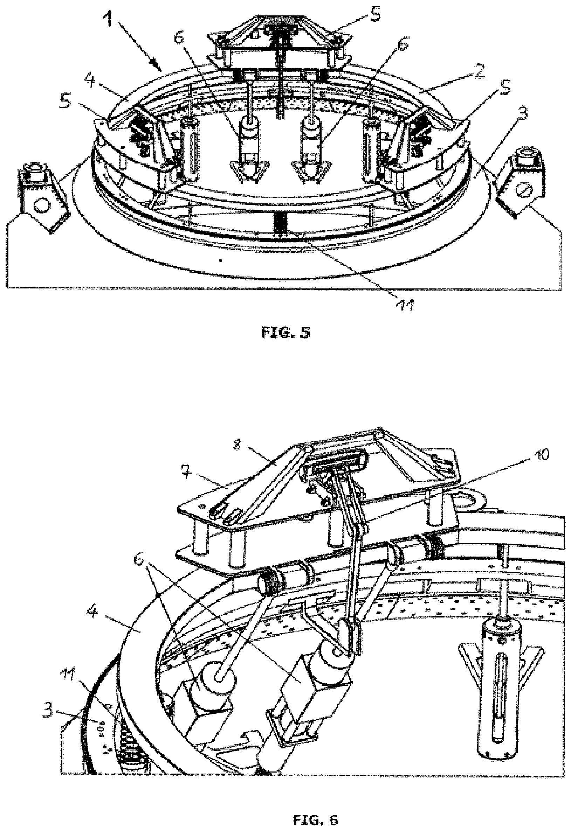

The docking system 1 for spacecraft according to an embodiment of the invention is shown in a stowed position in Fig. 1 and in a deployed position in Fig. 5.

The docking system 1 comprises an end ring 3 and a docking assembly 2.

The docking assembly 2 comprises the following elements:
- a support ring 4 connected to a plurality of linear actuators 6 for deployment and retracting, and
- at least three docking platforms 5 hinged to the support ring 4.

The embodiment shown in the figures includes three docking platforms 5.

Each docking platform 5 comprises:
- a main body 7,
- a guide member 8,
- initial engagement means 9, and
- a docking mechanism 10 fixed to the main body 7 and articulated to the end ring 3.

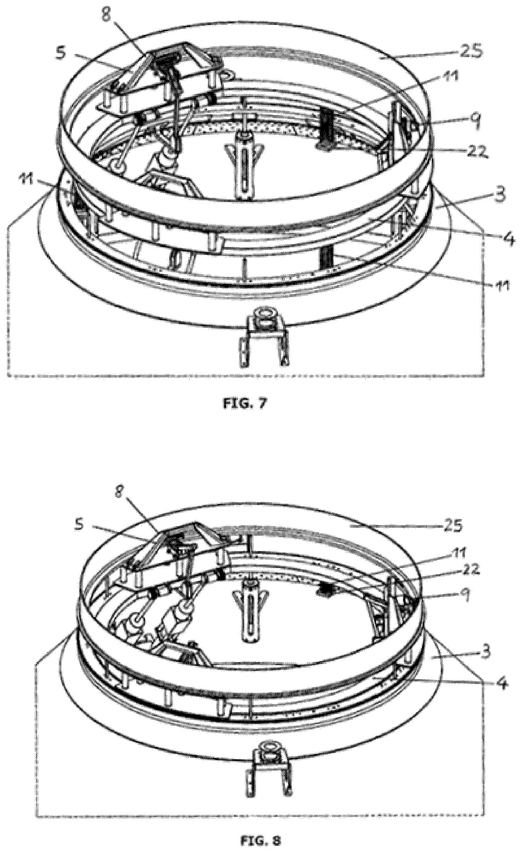

The support ring 4 and the end ring 3 are connected by elastic means 11 (in Figs. 6 and 7 the elastic means 11 are longitudinal springs), such that in a stowed position (see Fig. 1) the docking assembly 2 is placed inside the end ring 3 and in a deployed position (see Fig. 5) the docking assembly 2 is placed out of the end ring 3.

The longitudinal springs can have one of its ends on a fixed element 22 in the end ring 3 (see Fig. 7).

As for the initial engagement means 9, they can be latch mechanisms, as the ones shown in Figs. 7, 9 and 15. They can comprise a latch bracket 12, a spring and a latch 13 as a movable element.

The docking platforms 5 can comprise an end stop and torque springs 14 with one pin 15 attached to the support ring 4 and one pin 15' attached to the main body 7 of the docking platform 5 (see Figs. 2 and 6).

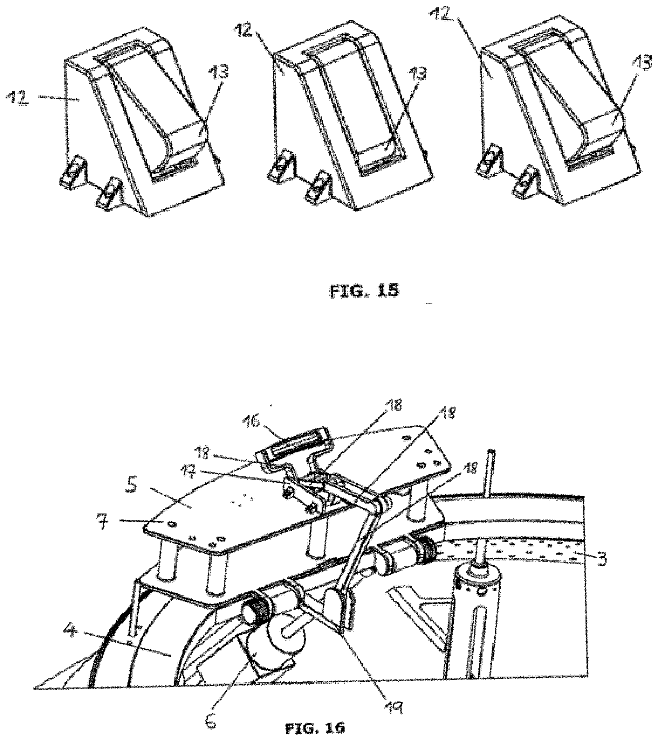

As for the docking mechanism 10, it is represented in Fig. 16 and can comprise:
- a pressure member 16,
- a bracket 17 fixed to the main body of the docking platform,
- four articulated links 18, and
- a fix member 19 integrated in the end ring 3 that articulates the end of one of the links to the end ring 3.

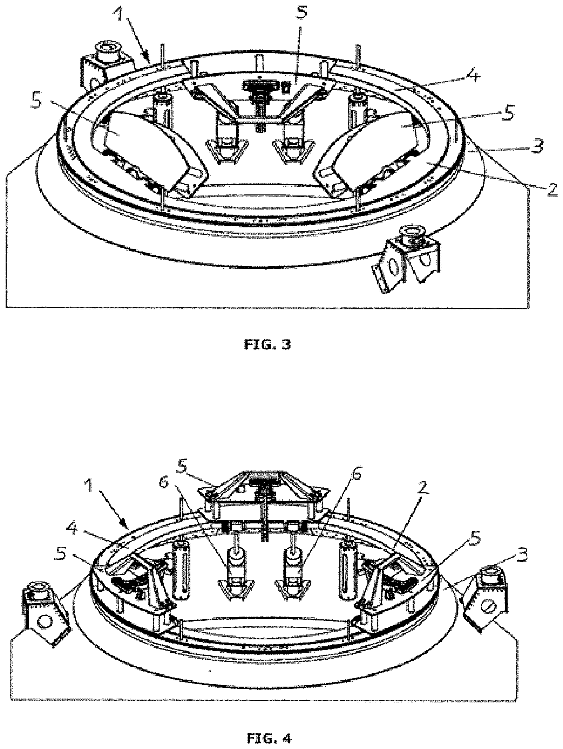

The docking system 1 can be integrated in a spacecraft 20, such that one end of the linear actuators 6 is attached to the inner surface of the spacecraft 20, as seen in Figs. 3, 4 and 5.

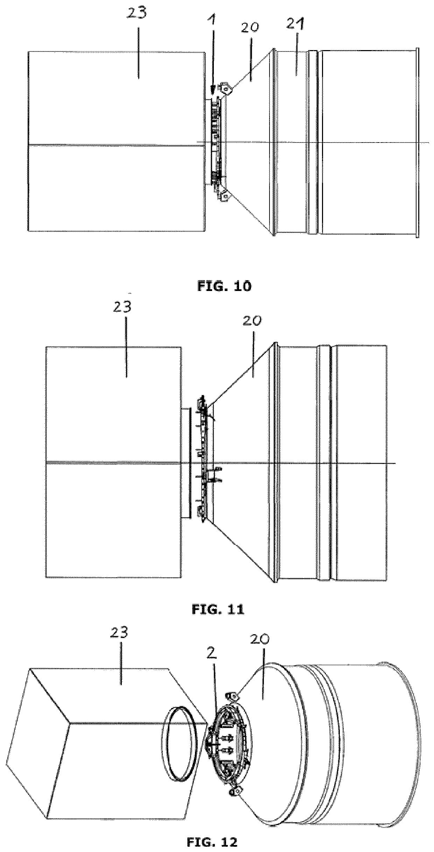

The spacecraft 20 can be a satellite adapter in a launcher (see Figs. 10-14), and also a satellite with an interface ring.

The satellite adapter can be equipped with the launcher last stage 21 that performs the control and guidance functions.

This docking system 1 is especially applicable to a satellite adapter in a launcher. When the launch phase finishes, the last stage of the launcher places the payload (a customer satellite, for example) in the geostationary orbit. Fig. 10 shows the satellite adapter 20, the last stage 21, the customer satellite 23 and the docking system 1 for spacecraft before the satellite separation.

Fig. 11 shows the separation of the customer satellite 23 from the satellite adapter 20.

Fig. 12 shows the deployment of the docking assembly 2 after the separation of the customer satellite 23 from the satellite adapter 20.

When the separation of the customer satellite 23 from the satellite adapter 20 and the deployment of the docking assembly 2 have finished, the first phase of the mission for life extension of the satellite adapter starts (it is called the rendezvous).

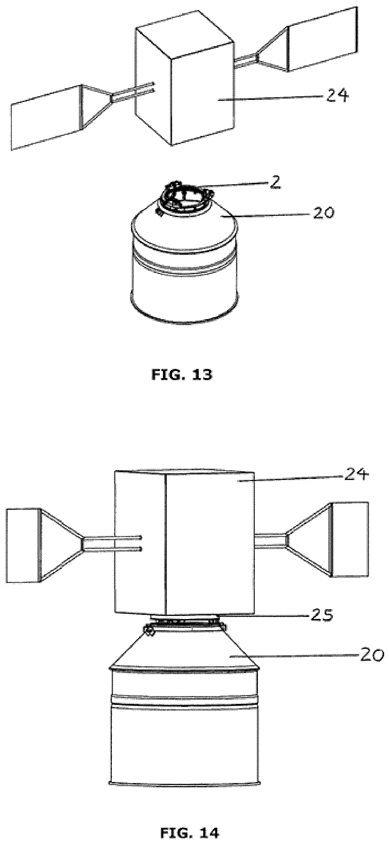

Fig. 13 shows the approximation of the satellite adapter 20 to the target satellite 24. It can be seen that the target satellite 24 is completely deployed. The target satellite 24 has an interface ring 25 that remains in it after the separation when it was launched into orbit, and there is no need for any special adaptations in the interface ring 25 for performing the docking.

Fig. 14 shows the docking between the target satellite 24 and the satellite adapter 20.

Once the docking is completed (see Fig. 14) the satellite adapter 20 (service satellite) could give support to the target satellite 24, for example in orbit and attitude maneuvers, navigation, communication, etc.

At the beginning of the mission, the docking assembly 2 is stowed, as it needs to be integrated inside the internal volume of the satellite adapter 20 (see Fig. 1).

The first phase of the docking is the deployment of the docking assembly 2, shown in Figs. 1 to 4.

There can be a joint element between the docking platforms 5 and the satellite adapter 20 (for instance, a stop, not shown in the figures) that prevents the docking platforms 5 from unfolding. The joint element can also be an electrovalve.

When the customer satellite 23 is at a certain distance away from the satellite adapter 20, the joint between the docking platforms 5 and the satellite adapter 20 is cut-off, so the docking platforms 5 do not have the opposition of the joint and the torque springs 14 attached to the docking platforms 5 make them rotate.

In Fig. 2 the configuration of these torque springs 14 can be seen. In this Fig. 2 there are two torque springs 14 attached to each docking platform 5, one at each end. The aim of the torque springs 14 is to apply a torque to the articulation that joins the docking platform 5 with the support ring 4, so one pin 15 needs to be fixed to the docking platform 5 and the other pin 15' needs to be fixed to the support ring 4.

Accordingly, after the customer satellite 23 is separated from the satellite adapter 20 the required distance to avoid the interference with the satellite adapter 20, the docking platforms 5 start rotating. The docking platforms 5 rotate due to the action of the torque springs 14 until the lower surface of the main body 7 of the docking platforms 5 touches the upper surface of the support ring 4. In order to avoid the rotation of the docking platform 5, a latch mechanism 9 can be introduced in the articulation between the docking platform 5 and the support ring 4, such that when the docking platform 5 touches the support ring 4, the latch 13 can be activated by a spring.

The next phase is the shock absorbing position. Fig. 5 shows the position in which the support ring 4 is displaced vertically to achieve a gap between the docking assembly 2 and the upper surface of the satellite adapter 20. The aim of this gap is to protect the satellite adapter 20 and the target satellite 24 when the contact between them takes place. The shock energy is absorbed by the support ring 4.

For that purpose several longitudinal springs 11 (for instance, three ones, in Fig. 7) are arranged, fixed to the end ring 3 of the satellite adapter 20 on one end and to the support ring 4 on the other end. The longitudinal springs 11 are positioned around the support ring 4 circumference with the same angular distance between each other.

When the support ring 4 is in the retracted position, the longitudinal springs 11 are compressed and the support ring 4 is held by the linear actuators 6. In order to deploy the support ring 4, the actuators 6 stop applying force and the longitudinal springs 11 are elongated, displacing the support ring 4 in the axial direction.

As the longitudinal spring 11 needs to be attached to the structure of the satellite adapter 20, a fix element 22 has been designed to serve as a platform to fix the longitudinal springs 11. The other end of the spring 11 is attached to the bottom surface of the support ring 4, as seen in Fig. 7.

The next phase, called soft docking, starts with the approximation of the satellite adapter 20 to the target satellite 24. The guide members 8 of the docking platform 5 correct the misalignments of the docking, and the interface ring 25 of the target satellite 24 touches the upper surface of the main body 7 of the docking platform 5. In that instant the first docking phase takes place, in which the initial engagement means 9 on the main body 7 make the initial engagement. In the embodiment of figures 7, 9 and 15 the initial engagement means 9 are latches. After this initial engagement the target satellite 24 is partially constrained by the initial engagement means 9 (i.e., the latches in figures 7, 9 and 15).

The latch 13 is outspread from its support element before the approach of the target satellite 24. The position of the latch 13 is achieved using a spring attached both to the latch 13 and to the latch support. Then, when the interface ring 25 of the target satellite 24 touches the latch 13, the spring 11 is compressed and the latch 13 is inserted progressively in the latch support. The target satellite 24 will continue approaching the satellite adapter 20 and finally, the ring 25 of the target satellite 24 makes contact with the docking platform 5. At that instant, the ring 25 stops making contact with the latch 13 and the latch 13 rotates to its initial position pushed by the force of the spring (see the steps in Fig. 15). Finally the latch 13 presses the inner flange of the interface ring 25 of the target satellite 24.

At this point, the soft docking phase finishes. The satellite adapter 20 and the target satellite 24 are prevented from axial relative displacement between them. Then, the shock produced by the contact will compress the longitudinal springs 11 and will retract the support ring 4 until the maximum compression of the springs 11 is achieved. After that, the springs 11 will apply the same compression force in the opposite direction to the support ring 4 and an oscillatory movement between them will take place.

This oscillatory movement is attenuated by the pull and push forces that the linear actuators 6 will apply, so, after some time, the relative movement between the satellite adapter 20 and the target satellite 24 will stop.

However, in order to achieve a rigid joint between the satellite adapter 20 and the target satellite 24 and to be able to perform the mission in a correct way, it is necessary to perform the final phase of the docking.

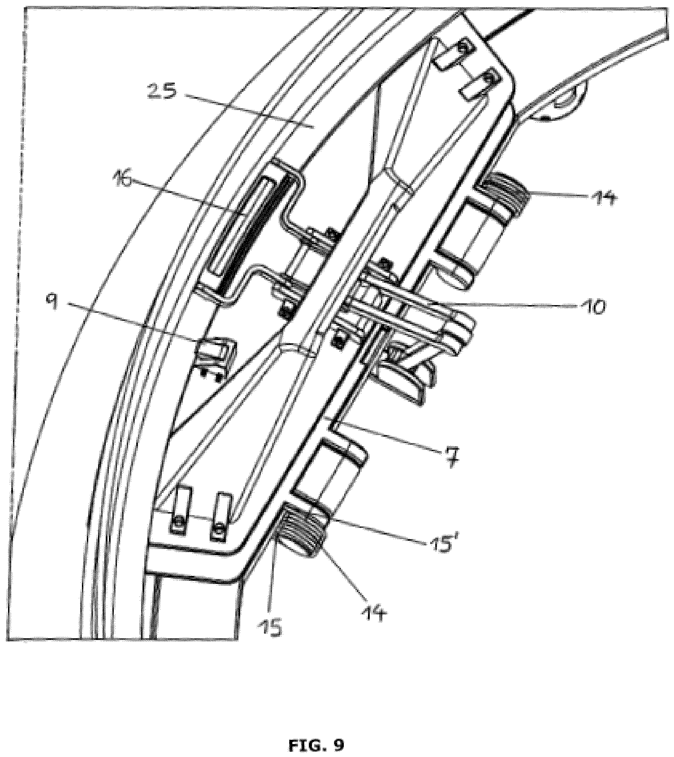

This phase, called the hard docking, is performed by retracting the support ring 4 until it reaches its initial position (see Fig. 8). As a result of this axial movement, the pressure member 16 of the docking mechanism 10 rotates, applying a force on the inner flange of the interface ring 25 of the target satellite 24 (Figs. 8 and 9), thus completing the docking.

This docking mechanism 10 is not only fixed to the docking platform 5, but is also articulated to the end ring 3 in the satellite adapter 20. When the support ring 4 is displaced upwards to place in the shock absorbing position, the docking mechanism 10 makes the pressure member 16 (for instance, in the shape of a bridle) open.

Conversely, when the actuators 6 are retracted to move the support ring 4 downwards, the pressure member 16 is moved in the opposite way, that is, the pressure member 16 closes. In this way, when the support ring 4 reaches its final position, the pressure member 16 applies the maximum force on the inner flange of the interface ring 25 of the target satellite 24 necessary to achieve a rigid docking.

Figure 9 shows the configuration of the docking mechanism 10 in its final position.

When the actuators 6 retract the support ring 4, the springs 11 attached to this support ring 4 will compress. In this way, the actuators 6 will be placed in a configuration of continuous attraction in order to ensure the hard docking during the mission.

However, it could be possible to introduce a latch system between the support ring 4 and the end ring 3 of the satellite adapter 20, releasing the continuous actuation of the actuators 6. As there are several longitudinal springs 11 placed on the support ring 4, once the hard docking is completed, the springs 11 will apply an upwards force to the support ring 4 and the hard docking will be rigid, avoiding possible clearances.

Although the present invention has been fully described in connection with preferred embodiments, it is apparent that modifications can be made within the scope, not considering this as limited by these embodiments, but by the content of the following claims.

## Claims

1. Docking system (1) for spacecraft, comprising an end ring (3) and a docking assembly (2), the docking assembly (2) comprising a support ring (4) connected to a plurality of linear actuators (6) for deployment and retracting, the support ring (4) and the end ring (3) being connected, such that in a stowed position the docking assembly (2) is placed inside the end ring (3) and in a deployed position the docking assembly (2) is placed out of the end ring (3),
**characterized in that** the docking assembly comprises at least three docking platforms (5) hinged to the support ring (4), each docking platform (5) comprising:
- a main body (7),
- a guide member (8),
- initial engagement means (9), and
- a docking mechanism (10) fixed to the main body (7) and articulated to the end ring (3),
the support ring (4) and the end ring (3) being connected by elastic means (11).

2. Docking system (1) for spacecraft, according to claim 1, wherein the elastic means (11) are longitudinal springs with one end on a fixed element (22) in the end ring (3).

3. Docking system (1) for spacecraft, according to any of the previous claims, wherein the initial engagement means (9) are latch mechanisms

4. Docking system (1) for spacecraft, according to claim 3, wherein the latch mechanisms comprise a latch bracket (12), a spring and a latch (13) as a movable element.

5. Docking system (1) for spacecraft, according to any of the previous claims, wherein the docking platforms (5) each comprise a stop and torque springs (14) with one pin (15) attached to the support ring (4) and one pin (15') attached to the main body (7) of the docking platform (5).

6. Docking system (1) for spacecraft, according to any of the previous claims, wherein the docking mechanism (10) comprises:
- a pressure member (16),
- a bracket (17) fixed to the main body (7) of the docking platform (5),
- four articulated links (18), and
- a fix member (19) integrated in the end ring (3) that articulates the end of one of the links to the end ring (3).

7. Spacecraft (20) with a docking system (1) for spacecraft, **characterized in that** it comprises a docking system (1) for spacecraft of claims 1-6 on one end, such that one end of the linear actuators (6) is attached to an inner surface of the spacecraft (20).

8. Spacecraft (20) with a docking system (1) for spacecraft, according to claim 7, wherein the spacecraft (20) is a satellite adapter in a launcher.

9. Spacecraft (20) with a docking system (1) for spacecraft, according to claim 7, wherein the spacecraft (20) is a satellite with an interface ring.

10. Spacecraft (20) with a docking system (1) for spacecraft, according to claim 8, wherein the satellite adapter is equipped with the launcher last stage (21) that performs the control and guidance functions.

## Patentansprüche

1. Andocksystem (1) für Raumfahrzeuge, das einen Endring (3) und eine Andockbaugruppe (2) umfasst, wobei die Andockbaugruppe (2) einen Stützring (4) umfasst, der mit einer Vielzahl von Linearaktuatoren (6) zum Ausfahren und Einfahren verbunden ist, wobei der Stützring (4) und der Endring (3) so verbunden sind, dass die Andockbaugruppe (2) in einer verstauten Position in den Endring (3) eingesetzt ist und in einer ausgefahrenen Position die Andockbaugruppe (2) außerhalb des Endrings (3) positioniert ist,
**dadurch gekennzeichnet, dass** die Andockbaugruppe mindestens drei Andockplattformen (5) umfasst, die an dem Stützring (4) angelenkt sind, wobei jede Andockplattform (5) Folgendes umfasst:
- einen Hauptkörper (7),
- ein Führungselement (8),
- anfängliche Eingriffsmittel (9), und
- einen Andockmechanismus (10), der an dem Hauptkörper (7) befestigt und an dem Endring (3) angelenkt ist,
der Stützring (4) und der Endring (3) durch elastische Mittel (11) verbunden sind.

2. Andocksystem (1) für Raumfahrzeuge nach Anspruch 1, wobei die elastischen Mittel (11) Längsfedern mit einem Ende an einem festen Element (22) im Endring (3) sind.

3. Andocksystem (1) für Raumfahrzeuge nach einem der vorstehenden Ansprüche, wobei die anfänglichen Eingriffsmittel (9) Verriegelungsmechanismen sind

4. Andocksystem (1) für Raumfahrzeuge nach Anspruch 3, wobei die Verriegelungsmechanismen eine Verriegelungshalterung (12), eine Feder und eine Verriegelung (13) als bewegliches Element umfassen.

5. Andocksystem (1) für Raumfahrzeuge nach einem der vorstehenden Ansprüche, wobei die Andockplattformen (5) jeweils eine Anschlag- und Drehmomentfeder (14) mit einem Stift (15), der am Stützring (4) befestigt ist, und einem Stift (15'), der am Hauptkörper (7) der Andockplattform (5) befestigt ist, umfassen.

6. Andocksystem (1) für Raumfahrzeuge nach einem der vorstehenden Ansprüche, wobei der Andockmechanismus (10) Folgendes umfasst:
- ein Druckelement (16),
- eine Halterung (17), die am Hauptkörper (7) der Andockplattform (5) befestigt ist,
- vier Gelenkverbindungen (18), und
- ein Befestigungselement (19), das in den Endring (3) integriert ist und das Ende eines der Glieder mit dem Endring (3) gelenkig verbindet.

7. Raumfahrzeug (20) mit einem Andocksystem (1) für Raumfahrzeuge, **dadurch gekennzeichnet, dass** es ein Andocksystem (1) für Raumfahrzeuge nach den Ansprüchen 1 bis 6 an einem Ende umfasst, so dass ein Ende der Linearaktuatoren (6) an einer Innenfläche des Raumfahrzeugs (20) befestigt ist.

8. Raumfahrzeug (20) mit einem Andocksystem (1) für Raumfahrzeuge nach Anspruch 7, wobei das Raumfahrzeug (20) ein Satellitenadapter in einer Trägerrakete ist.

9. Raumfahrzeug (20) mit einem Andocksystem (1) für Raumfahrzeuge nach Anspruch 7, wobei das Raumfahrzeug (20) ein Satellit mit einem Schnittstellenring ist.

10. Raumfahrzeug (20) mit einem Andocksystem (1) für Raumfahrzeuge nach Anspruch 8, wobei der Satellitenadapter mit der letzten Stufe (21) der Trägerrakete ausgestattet ist, die die Steuerungs- und Führungsfunktionen ausführt.

## Revendications

1. Système d'accouplement (1) pour véhicule spatial, comprenant une bague d'extrémité (3) et un ensemble d'accouplement (2), l'ensemble d'accouplement (2) comprenant une bague de support (4) reliée à une pluralité d'actionneurs linéaires (6) pour le déploiement et la rétraction, la bague de support (4) et la bague d'extrémité (3) étant reliées, de sorte que dans une position rangée, l'ensemble d'accouplement (2) est placé à l'intérieur de la bague d'extrémité (3) et dans une position déployée, l'ensemble d'accouplement (2) est placé à l'extérieur de la bague d'extrémité (3),
**caractérisé en ce que** l'ensemble d'accouplement comprend au moins trois plates-formes d'accouplement (5) articulées sur la bague de support (4), chaque plate-forme d'accouplement (5) comprenant :
- un corps principal (7),
- un élément de guidage (8),
- des moyens d'engagement initial (9), et
- un mécanisme d'accouplement (10) fixé au corps principal (7) et articulé sur la bague d'extrémité (3),
la bague de support (4) et la bague d'extrémité (3) étant reliées par des moyens élastiques (11).

2. Système d'accouplement (1) pour véhicule spatial selon la revendication 1, dans lequel les moyens élastiques (11) sont des ressorts longitudinaux avec une extrémité sur un élément fixe (22) dans la bague d'extrémité (3).

3. Système d'accouplement (1) pour véhicule spatial selon l'une quelconque des revendications précédentes, dans lequel les moyens d'engagement initial (9) sont des mécanismes de verrouillage.

4. Système d'accouplement (1) pour véhicule spatial selon la revendication 3, dans lequel les mécanismes de verrouillage comprennent un support de verrouillage (12), un ressort et un verrou (13) en tant qu'élément mobile.

5. Système d'accouplement (1) pour véhicule spatial selon l'une quelconque des revendications précédentes, dans lequel les plates-formes d'accouplement (5) comprennent chacune un ressort d'arrêt et de couple (14) avec une broche (15) fixée à la bague de support (4) et une broche (15') fixée au corps principal (7) de la plate-forme d'accouplement (5).

6. Système d'accouplement (1) pour véhicule spatial selon l'une quelconque des revendications précédentes, dans lequel le mécanisme d'accouplement (10) comprend :
- un élément de pression (16),
- un support (17) fixé au corps principal (7) de la plate-forme d'accouplement (5),
- quatre liaisons articulées (18), et
- un élément fixe (19) intégré dans la bague d'extrémité (3) qui articule l'extrémité de l'une des liaisons sur la bague d'extrémité (3).

7. Véhicule spatial (20) avec un système d'accouplement (1) pour véhicule spatial, **caractérisé en ce qu'**il comprend un système d'accouplement (1) pour véhicule spatial selon les revendications 1 à 6 à une extrémité, de sorte qu'une extrémité des actionneurs linéaires (6) est fixée à une surface intérieure du véhicule spatial (20).

8. Véhicule spatial (20) avec un système d'accouplement (1) pour véhicule spatial selon la revendication 7, dans lequel le véhicule spatial (20) est un adaptateur de satellite dans un lanceur.

9. Véhicule spatial (20) avec un système d'accouplement (1) pour véhicule spatial selon la revendication 7, dans lequel le véhicule spatial (20) est un satellite avec une bague d'interface.

10. Véhicule spatial (20) avec un système d'accouplement (1) pour véhicule spatial selon la revendication 8, dans lequel l'adaptateur de satellite est équipé du dernier étage de lanceur (21) qui exécute les fonctions de commande et de guidage.
